# EUROPEAN PATENT APPLICATION

(11) **EP 1 353 329 A2**
(43) Date of publication of application: **15.10.2003**
(21) Application number: 03251929.0
(22) Date of filing: 27.03.2003
(51) Int. Cl.: G11B 19/00, G11B 31/00

(54) **Recording medium player apparatus**

(30) Priority: 11.04.2002 KR 2002019614
(71) Applicant: SAMSUNG ELECTRONICS CO., LTD., Suwon-City, Kyungki-do (KR)
(72) Inventor: Yong-ho, Kim, Gweonseon-gu, Suwon-city,Gyunggi-do (KR)
(74) Representative: Geary, Stuart Lloyd

(57) **Abstract**

A reproducing apparatus for a recording medium that records compressed data, such as audio, video, or audio/video data, therein and a controlling method for controlling operation of the recording apparatus. An output signal of a broadcasting receiving unit (130) and VCR reproducing signal is output while compressed data is being decoded in reproducing mode, and as the decoding is completed, a signal such as an audio, video, or audio/video (A/V) signal, of decoded data is output so that a user can instead watch broadcasting program or VCR reproducing screen without having to change the mode while the data of the recording medium is decoded.

## Description

The present invention relates to a recording medium player apparatus comprising a first signal source for outputting a first signal, a second signal source, user input means for receiving a user input, processing means for processing a signal from said second signal source, to produce a second signal, there being a perceptible delay between the start of said processing and the output of the second signal, and control means for selectively causing the first and second signals to be output.

As known in the art, the term DVD refers to a digital versatile disk, which is an image medium capable of recording a motion picture with high quality. Image data recorded on a DVD is compressed with an MPEG method, which is an international standard method. A DVD player is an apparatus for decoding compressed image data recorded on a DVD, converting the data into an analogue signal and outputting the image data. A VCR is an apparatus for recording a signal, in particular an audio/video signal, on a magnetic tape, or reproducing such an audio/video signal recorded on a magnetic tape.

A combination system developed to perform the function of a DVD player and a VCR together is called a DVD/VCR combination system or a DVD/VCR combo system.

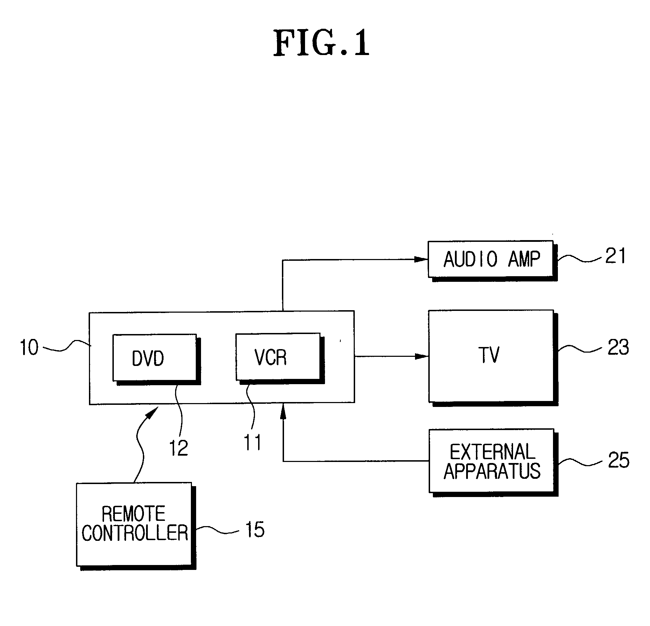

Figure 1 is a block diagram schematically showing a conventional DVD/VCR combo system and peripheral devices connected to the combo system. Referring to Figure 1, the DVD/VCR combo system 10 has a VCR unit 11 to perform the general functions of a VCR, and a DVD unit 12 to perform the general functions of DVD, i.e. to reproduce images and sound recorded on a DVD.

In addition to functioning as the VCR unit 11 and the DVD unit 12, the DVD/VCR combo system 10 also has the advantage of being capable of recording the images and the sound reproduced at the DVD unit 12 on a magnetic tape at the VCR unit 11.

A television (TV) 23 can be connected to the DVD/VCR combo system 10 as a peripheral device for outputting the images and the sound reproduced at the DVD unit 12 and the VCR unit 11 mounted therein. Moreover, an audio amplifier 21 can be connected as a peripheral device for outputting the sound reproduced at the DVD unit 12, and an external apparatus 25, such as a camcorder, can be connected to the DVD/VCR combo system 10. The DVD/VCR combo system 10 records and reproduces the images and the sound transmitted from the external apparatus 25.

The VCR unit 11 and the DVD unit 12 are configured as one system in a single casing in the DVD/VCR combo system 10. A user can manipulate the functions of the VCR unit 11 and the DVD unit 12 and change between VCR and DVD operation modes by manipulating a manipulation panel (or user input means) (not shown) disposed at the front of the DVD/VCR combo system 10, or via a separate input device such as a remote controller 15.

The combo system 10 can reproduce the image data recorded on a videotape or an optical disk, and a combo system with a broadcast television signal receiving function allows viewers to watch broadcast television programs by outputting the broadcast television signal transmitted through a broadcast television receiver unit (not shown), such as a tuner disposed in the combo system 10.

To reproduce the image data recorded on a magnetic tape using the above-described combo system 10, VCR reproduction is performed after the mode of the combo system 10 is switched to a VCR reproduction mode. To reproduce a DVD, DVD reproduction is performed after the mode of the combo system 10 is switched to a DVD reproduction mode. When reproducing the magnetic tape, only the analogue signal processing is required. Thus, not much time is required to output the image data to a screen, even if the VCR is activated from a stop status.

However, when reproducing a DVD, since the image data is recorded on the disk in a compressed digital form, time is required for error correction and recovery. Furthermore, since the compressed data also requires data decoding, and since the decoded digital data must to be converted into an analogue image signal, the user has to wait for many seconds after inputting a reproduction command until he or she can finally watch the image data on a screen, i.e. there is a perceptible delay. Usually, a logo screen stored in the memory is shown until the DVD is reproduced, but the screen is simple and thus is tedious to view.

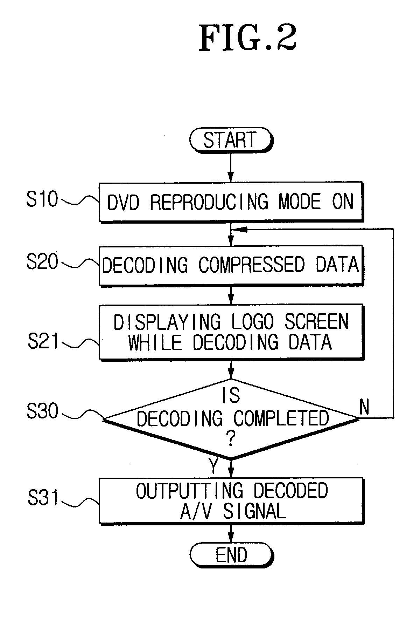

Figure 2 is a flow chart schematically showing a control method in a DVD reproduction mode of the conventional DVD/VCR combo system. Referring to Figure 2, when the DVD reproduction mode is on and the DVD is loaded accordingly in step S10, the compressed data recorded on the DVD is decoded and converted into an analogue signal in step S20. While the compressed data is being decoded, a logo screen is displayed on the screen in step S21, or a blue screen is displayed. The A/V signal of the decoded data is then output through the TV 23 or the audio amplifier 21 in step S31.

Therefore, during the reproduction of a DVD, the user must wait, watching the tedious logo screen or the blue screen while the data is being decoded, or another screen by changing the operation mode to the VCR mode or to the broadcast television mode, and then change back to the DVD mode again when the data is completely decoded.

A recording medium player apparatus, according to the present invention, is characterised in that the control means is configured such that, when the first signal is being output, it continues to output the first signal after reception of a user input until a point not substantially before the end of said delay.

Preferably, the control means is configured to be responsive to a switching signal transmitted from the processing means in response to a threshold amount of processing being accomplished after the start of processing, to cause the second signal to be output.

Preferably, the apparatus comprises switching means for receiving the first and second signals as inputs and outputting the first or the second signal.

Preferably, said second signal source is a DVD read head.

Preferably, said first signal source is a tape head.

Preferably, said first signal source is a broadcast television receiver means.

Embodiments of the present invention will now be described, by way of example, with reference to Figures 3 to 5 of the accompanying drawings, in which:
Figure 1 is a block diagram schematically showing a conventional DVD/VCR combo system;
Figure 2 is a flow chart schematically showing a control method in a DVD reproduction mode of the conventional DVD/VCR combo system;
Figure 3 is a block diagram schematically showing components of a DVD/VCR combo system according to the present invention;
Figure 4 is a block diagram showing the internal structure of the DVD/VCR combo system according to the present invention; and
Figure 5 is a flow chart showing a control method of the DVD/VCR combo system according to the present invention.

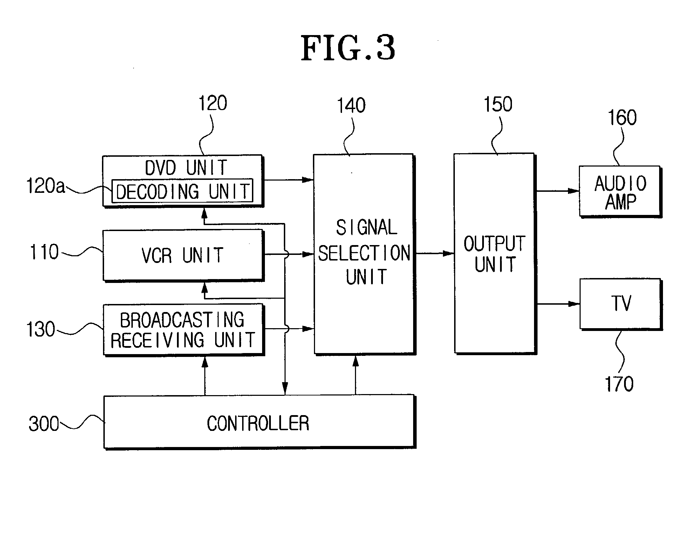

Referring to Figure 3, a combo system according to an embodiment of the present invention includes a controller 300, a DVD unit 120, a decoding unit 120a, a VCR unit 110, a broadcast television receiver unit 130, a signal selection unit 140 and an output unit 150. The reference numeral 160 is an audio amplifier to output an audio signal, and 170 is a TV.

The controller 300 outputs a controlling signal to control each component of the combo system. Either a DVD controlling unit for controlling the DVD unit 120 or a VCR controlling unit for controlling the VCR unit 110 can play the role of the host controller, or a controlling unit can be disposed as a separate host. The DVD unit 120 decodes the stored data to reproduce a DVD and outputs a decoded A/V signal. The stored data is decoded by the decoding unit 120a. The VCR unit 110 outputs the image and the sound data stored on a magnetic tape. The broadcast television receiver unit 130 outputs a broadcast television signal after receiving an input signal from an external source. The signal selection unit 140 selects a signal to be output in accordance with the control signal of the controller 300 from signals output from the DVD unit 120, the VCR unit 110 and/or the broadcast television receiver unit 130, and sends the selected signal to the output unit 150. The output unit 150 outputs the transmitted signal to the audio amplifier 160 or the TV 170 after converting the signal into an audio, video, or audio/video signal, as appropriate.

According to an embodiment of the present invention, the controller 300 controls the signal selection unit 140 in order to output one of the output signals of the broadcast television receiver unit 130 or the VCR unit 110 when it is determined that the DVD is being decoded in the DVD reproduction mode. When a decoding completion signal is input, the controller 300 controls the signal selection unit 140 in order to output the decoded DVD signal.

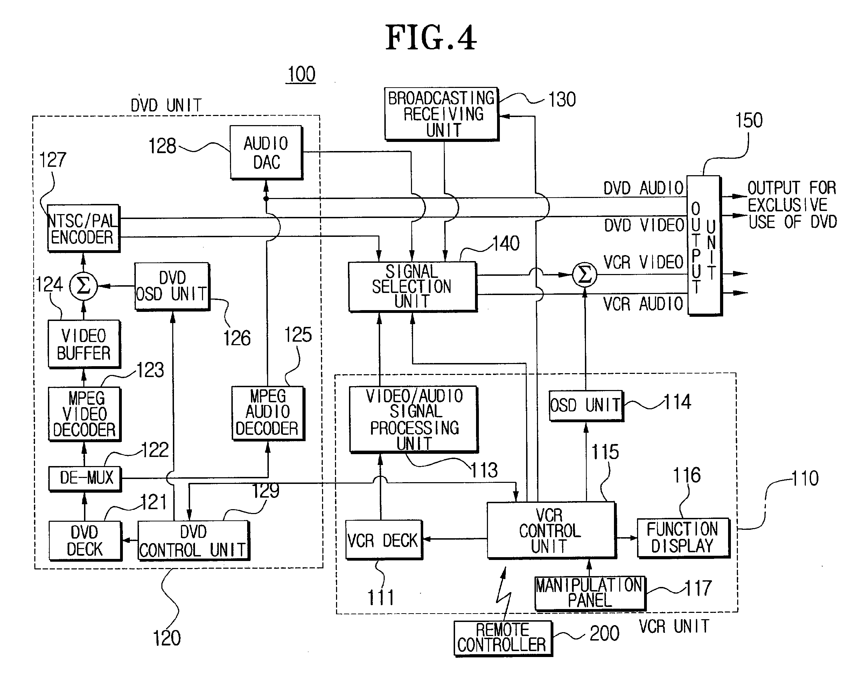

A further embodiment of the present invention will now be described with reference to Figure 4. In the combo system 100 of Figure 4, the VCR controlling unit 115 of the VCR unit 110 is the controller 300 that is the host controller shown in Figure 3.

Referring to Figure 4, a DVD/VCR combo system 100 has a VCR unit 110 to perform the general functions of a VCR, a DVD unit 120 to perform the general functions of a DVD player, a broadcast television receiver unit 130 to receive a broadcast television signal, and a signal selection unit 140 to perform signal selection with respect to the signals output from the VCR unit 110, the DVD unit 120 and the broadcast television receiver unit 130. The DVD/VCR combo system 100 further includes an output unit 150 to output the signals from the VCR unit 110 and the DVD unit 120 to peripheral devices such as a TV or an amplifier, and an OSD unit 114 to provide an OSD (on-screen display) function to the image signal output from the VCR unit 110 and the DVD unit 120.

The VCR unit 110 includes a VCR deck 111 to reproduce the signal recorded on a magnetic tape or record a signal on a magnetic tape, a video/audio signal processing unit 113 to process the video and the audio signals to be recorded on or reproduced from the VCR deck 111, and a VCR controlling unit 115 to control the entire operation of the VCR deck 111 and the video/audio signal processing unit 113.

The VCR controlling unit 115 is the host controller that controls the entire combo system 100, and the VCR controlling unit 115 outputs control signals to the signal selection unit 140, the broadcast television receiver unit 130 and a DVD controlling unit 129. A function display unit 116 displays the operational status of the system to a user. The function display unit 116 generally uses an LCD, an FLT or an LED. A manipulation panel 117 is used for inputting various commands from the user.

The DVD unit 120 includes a DVD controlling unit 129, a DVD deck 121, a DE-MUX (DE-multiplex) 122, an MPEG video decoder 123, a DVD OSD unit 126, an NTSC/PAL encoder 127, an MPEG audio decoder 125 and an audio DAC (D/A converter) 128. All the parts of the DVD unit 120 are formed as one chip except for the DVD controlling unit 129 and the DVD deck 121.

The DVD deck 121 reads the data recorded on a DVD in order to perform the reproduction operation with respect to the DVD. The DE-MUX 122 divides the digital data output from the DVD deck 121 into video data and audio data. The MPEG video decoder 123 decodes compressed video data into the original digital video data, and a video buffer 124 stores a certain amount of the video data. The video buffer 124 usually stores sufficient video data for constructing one frame on the screen.

The MPEG video decoder 123 receives the data read by the DVD deck 121 and decodes the data. After that, the MPEG video decoder 123 sends information to the DVD controlling unit 129 indicating whether the decoding of the video data required for constructing one frame is completed or not. The information on the decoding completion of the video data required for constructing one frame can be output from the video buffer 124. The DVD controlling unit 129 controls the output of the DVD A/V signal until the MPEG video decoder 123 decodes the data for outputting a successful frame.

The signal selection unit 140 receives the signals output from the NTSC/PAL encoder 127, the audio DAC 128, the broadcast television receiver unit 130 and the video/audio signal processing unit 113. The signal selection unit 140 performs a selection operation with respect to the input signals under the control of the VCR controlling unit 114. Moreover, the signal selection unit 140 outputs to the OSD unit 114 and the output unit 150 a signal input, such as a request for reproduction of a DVD, reproduction and recording of the videotape, and output of the broadcast television signal.

The output unit 150 generates the DVD A/V signal, an S-video or component video signal, an analogue audio signal, and a composite video signal. Among them, the digital audio and the S-video signal or the component signal are exclusively output for the DVD, and thus, they are separate from the analogue output signals, that is, the composite video signal and the analogue audio signal. Peripheral devices such as a TV or an audio amplifier are connected to the output unit 150, and accordingly, the images and the sound are output from the peripheral devices.

Furthermore, the combo system 100 according to an embodiment of the present invention has a broadcast television receiver unit 130 to receive a broadcast television signal from an antenna and output the image signal via a certain channel. The broadcast television receiver unit 130 has an electromagnetic wave receiving component, such as the antenna, installed at the combo system 100, and a synchronization unit to extract the signal of a certain channel from the broadcast television signals received through the electromagnetic wave receiving component. The broadcast television signal received through the broadcast television receiver unit 130 is input into the signal selection unit 140, and the signal selection unit 140 outputs the received broadcast television signal to the TV or the amplifier based on the selection of the user.

In the above-described embodiments, the VCR controlling unit 115 is the host controller and controls the signal selection unit 140 in dependence on information sent from the DVD controlling unit 129, thus the DVD controlling unit 129 cannot directly control the signal selection unit. In addition, Figure 4 shows the means for inputting data, such as a remote controller sensor or the manipulation panel 117 being disposed only at the VCR unit 110 according to an embodiment of the present invention. Therefore, when the user inputs data related to the DVD, the data is transmitted to the DVD controlling unit 129 by the VCR controlling unit 115. Moreover, the DVD controlling unit 129 and the VCR controlling unit 115 can communicate with each other so that the data input by the user can be shared by the DVD unit 120 and the VCR unit 110.

An example of a controlling method of the reproducing apparatus of the recording medium having the recorded compressed data, such as audio, video, or audio/video data, will be described by referring to Figures 3-5.

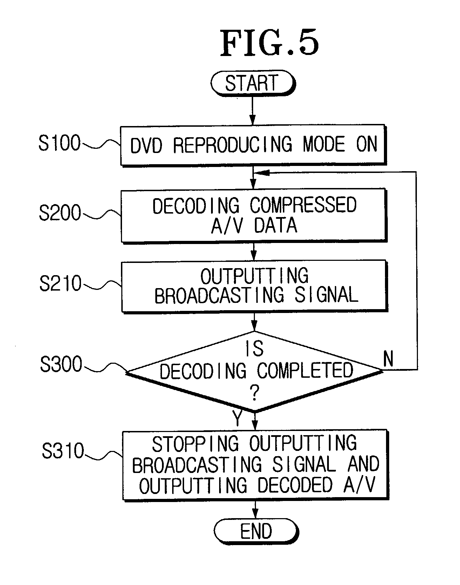

As shown in Figure 5, a DVD is loaded on the DVD deck 121, and the user selects the DVD reproduction mode by manipulating the manipulation panel 117, the DVD reproduction mode is then started as the DVD reproduction mode 'on' signal is input into the DVD controlling unit 129 from the VCR controlling unit 115 in step S100. When the DVD reproduction mode is on, the compressed data on the DVD is decoded at the decoding unit 120a, and the decoded video signal is stored at the video buffer 124 in step S200. The VCR controlling unit 115 controls the signal selection unit 140 so that the broadcast television signal is output based on data decoding signals from the DVD unit 120 in step S210. The VCR controlling unit 115 can allow the VCR output signal to be output instead of the broadcast television signal. Therefore, while the data on the DVD is being decoded, the user can watch the output broadcast television program or the VCR output signal instead of waiting and watching the tedious logo screen or the blue screen.

In other words, the DVD controlling unit 129 transmits a command to the VCR controlling unit 115 not to output the DVD signal until the data for constructing one frame on the screen is decoded, and the VCR controlling unit 115 controls the signal selection unit 140 so that the output signal of the VCR unit 110 or the output signal of the broadcast television receiver unit 130 is output to the output unit 150 instead of the DVD output signal. When the data for constructing one frame on the screen is decoded, a signal indicating the decoding completion is output from the MPEG video decoder 123 or the video buffer 124 to the DVD controlling unit 129, and the DVD controlling unit 129 transmits the signal to the VCR controlling unit 115 indicating that the DVD output signal is ready. When it is determined that the data is completely decoded in step S300, the VCR controlling unit 115 controls the signal selection unit 140 so that the decoded DVD signal is output in step S310.

Therefore, in the DVD reproduction mode, the user can watch the broadcast television picture or the VCR output picture during the decoding of the DVD without having to change to the broadcast television mode or to the VCR reproduction mode. Then, when the decoding is completed, the user can watch the DVD output picture.

According to the embodiments of the present invention described above, a user can watch the broadcast television picture output from the broadcast television receiver unit or the VCR output picture until the compressed image data on the DVD is decoded and a normal video signal is obtained, without changing the operation mode when the image data recorded on the DVD is reproduced, thus the tediousness of watching the logo screen stored in the memory is reduced, and also, the memory for storing the logo screen is not required.

## Claims

1. A recording medium player apparatus comprising:
a first signal source (110) for outputting a first signal;
a second signal source (120);
user input means (117) for receiving a user input;
processing means (120a) for processing a signal from said second signal source (120), to produce a second signal, there being a perceptible delay between the start of said processing and the output of the second signal; and
control means (300) for selectively causing the first and second signals to be output;
**characterised in that**
the control means (300) is configured such that, when the first signal is being output, it continues to output the first signal after reception of a user input until a point not substantially before the end of said delay.

2. An apparatus according to claim 1, wherein the control means (300) is configured to be responsive to a switching signal transmitted from the processing means (120a) in response to a threshold amount of processing being accomplished after the start of processing, to cause the second signal to be output.

3. An apparatus according to claim 1 or 2, comprising switching means (140) for receiving the first and second signals as inputs and outputting the first or the second signal.

4. An apparatus according to claim 1, wherein said second signal source (120) is a DVD read head.

5. An apparatus according to claim 1, wherein said first signal source (110) is a tape head.

6. An apparatus according to claim 1, wherein said first signal source is a broadcast television receiver means (130).

7. An apparatus for a recording medium that stores compressed data therein, the apparatus comprising:
a decoding unit, adapted to decode the compressed data stored in the recording medium;
a broadcasting receiving unit, adapted to receive a broadcast signal; and
a controller, adapted to control said broadcast receiving unit to output a received broadcast signal when the recording medium is loaded and while said decoding unit decodes an initial portion of the data of the recording medium, to enable a user to watch a broadcast program while the initial portion of the compressed data is being decoded.

8. An apparatus as claimed in claim 7, wherein:
said compressed data includes at least one of audio data and video data.

9. An apparatus as claimed in claim 7, wherein:
said controller is further adapted to control said decoding unit to output decoded data when the initial portion of the data decoding of the recording medium is completed.

10. An apparatus as claimed in claim 9, wherein:
said decoded data includes at least one of audio data and video data.

11. An apparatus as claimed in claim 7, further comprising:
a signal selection unit, adapted to receive said received broadcast signal output from said broadcast receiving unit and a video cassette recorder (VCR) output signal from a VCR; and
wherein said controller is further adapted to control said signal selection unit to output one of said received broadcast signal and said VCR output signal based on a selection by said user, to enable said user to watch said broadcast program or a VCR program, as desired, while said decoding unit is decoding the initial portion of the compressed data.

12. An apparatus as claimed in claim 7, further comprising:
a signal selection unit, adapted to receive said received broadcast signal output from said broadcast receiving unit, a video cassette recorder (VCR) output signal from a VCR and said decoded data output from said decoding unit; and
wherein said controller is further adapted to control said signal selection unit to output one of said received broadcast signal, said VCR output signal and said decoded data based on a selection by said user, to enable said user to watch said broadcast program, a VCR program, or a DVD program, as desired.

13. An apparatus as claimed in claim 7, further comprising:
a remote control, adapted for use by said user to control said selection unit to output one of said received broadcast signal, said VCR output signal and said decoded data.

14. A method for controlling a reproducing apparatus for a recording medium that stores compressed data therein, the method comprising:
decoding the compressed data of the recording medium; and
allowing a user to view a received broadcast signal while an initial portion of the compressed data of the recording medium is being decoded.

15. A method as claimed in claim 14, wherein:
said compressed data includes at least one of audio data and video data.

16. A method as claimed in claim 14, further comprising:
outputting a decoded signal when the decoding of said initial portion of the compressed data of the recording medium is completed, to enable said user to select said decoded signal for viewing.

17. A method as claimed in claim 16, wherein:
said decoded signal includes at least one of audio data and video data.

18. A method as claimed in claim 16, further comprising:
selecting, based on a command provided by said user, one of said received broadcast signal and said decoded data, for viewing.

19. A method as claimed in claim 14, further comprising:
outputting a video cassette recorder (VCR) output signal to enable said user to select said VCR output signal for viewing while the initial portion of the compressed data is being decoded.

20. A method as claimed in claim 19, further comprising:
selecting, based on a command provided by said user, one of said received broadcast signal, said VCR output signal and said decoded data, for viewing.
